# EUROPÄISCHE PATENTANMELDUNG

(11) **EP 2 492 516 A1**
(43) Veröffentlichungstag der Anmeldung: **29.08.2012**
(21) Anmeldenummer: 11155355.8
(22) Anmeldetag: 22.02.2011
(51) Int. Cl.: F16B 1/00, F16B 31/02

(54) **Markierungselement zur Kennzeichnung eines Anzugsmomentes einer Schraubverbindung**

(71) Anmelder: Siemens Aktiengesellschaft, 80333 München (DE)
(72) Erfinder: Jorgas, Matthias, 46399, Bocholt (DE); Klemenz, Harald, 90766, Fürth (DE)

(57) **Zusammenfassung**

Die Erfindung betrifft ein Markierungselement zur Kennzeichnung eines Anzugsmoments einer Schraubverbindung. Dabei ist das das Markierungselement derart in der Schraubverbindung angeordnet, dass eine zum Anzugsmoment der Schraubverbindung proportionale Kraft und/oder Verformung auf das Markierungselement einwirkt, wobei das Markierungselement derart ausgestaltet ist, dass bei Überschreitung eines Schwellwertes für das Anzugsmoment das Markierungselement derart verformt wird, dass eine dauerhaft sichtbare Veränderung des Markierungselementes eintritt. Durch ein solches Markierungselement kann selbsttätig und dauerhaft gekennzeichnet werden, dass die Schraubverbindung mit einem definierten Mindest-Anzugsmoment angezogen worden ist.

## Beschreibung

Die Erfindung betrifft ein Markierungselement, mit dem das korrekte bzw. vollständige Anziehen einer Schraube in einer Schraubverbindung dauerhaft visualisiert wird.

Bei der Montage von Maschinenelementen werden häufig Schrauben bzw. Schraubverbindungen als Fügemittel eingesetzt. Während Schraubverbindungen gegenüber anderen Fügeverfahren, beispielsweise Löten, Schweißen oder Nieten, den Vorteil aufweisen, das die Fügung wieder gelöst werden kann, haben die Schraubverbindungen den Nachteil, dass sie ihren Zweck oft nur dann dauerhaft erfüllen, wenn die Schraube bzw. die Mutter mit dem erforderlichen Anzugsmoment festgezogen wird. Dies gilt insbesondere für den dynamischen Lastfall. Üblicherweise werden Drehmomentschlüssel oder Schraubautomaten mit integrierter Drehmoment-Überwachung oder -Abschaltung verwendet, um sicherzustellen, dass eine Schraubverbindung mit dem erforderlichen Anzugsmoment hergestellt wurde.

Es hat sich dabei als nachteilig erwiesen, dass an der fertigen Schraubverbindung nicht sichtbar ist, ob die Schraubverbindung festgezogen wurde, und wenn ja, ob sie mit dem erforderlichen (minimalen) Anzugsmoment befestigt wurde. Es ist daher oft üblich, nach dem Befestigen einer Schraubverbindung die betreffende Schraube, ggf. nach einer nochmaligen Kontrolle des Anzugsmomentes ("Nachziehen"), farblich zu kennzeichnen. In wichtigen Fällen kann auch ein separates Protokoll geführt werden, wobei im Fall der Verwendung eines Schraubautomaten auch sog. "Log-Dateien" geführt werden können. Eine gebräuchliche Methode zur Dokumentation ist auch das anfertigen und archivieren von Fotografien; diese Methode ist beispielsweise bei Bauteilen mit einer Vielzahl von Schraubverbindungen gebräuchlich. In jedem Fall ist die Dokumentation der korrekten Führung einer Schraubverbindung ein zusätzlicher, aufwändiger Arbeitsschritt, wobei die Verifizierung des korrekten Anzugsmomentes durch ein entsprechend kalibriertes Messgerät (beispielsweise Drehmomentschlüssel) erfolgen muss.

Es ist daher eine Aufgabe der vorliegenden Erfindung, ein Markierungselement für eine Schraubverbindung anzugeben, mit dem das Erreichen eines definierten Anzugsmomentes einfach und dauerhaft sichtbar visualisiert werden kann.

Es ist ein zentraler Gedanke der erfindungsgemäßen Lösung der Aufgabe, dass beim Befestigen einer Schraubverbindung eine zum Anzugsmoment proportionale Kraft und/oder Verformung auf ein verschraubungs-seitiges Markierungselement einwirkt, wodurch dieses mechanisch derart verändert wird, dass die Veränderung dauerhaft sichtbar ist.

Die Lösung der Aufgabe sieht insbesondere ein Markierungselement gemäß dem Patentanspruch 1 vor. Dabei wird ein Markierungselement zur Kennzeichnung eines Anzugsmoments einer Schraubverbindung vorgeschlagen, wobei das Markierungselement derart in der Schraubverbindung angeordnet ist, dass eine zum Anzugsmoment der Schraubverbindung proportionale Kraft und/oder proportionale Verformung und/oder Erwärmung auf das Markierungselement einwirkt, wobei das Markierungselement derart ausgestaltet ist, dass bei Überschreitung eines Schwellwertes für das Anzugsmoment und demzufolge für die Kraft und/oder Verformung und/oder Erwärmung das Markierungselement derart verändert bzw. verformt wird, dass eine dauerhaft sichtbare Veränderung des Markierungselements eintritt oder eine dauerhaft sichtbare Kennzeichnung durch das Markierungselement bewirkt wird. Damit ist eine separate Dokumentation des Festziehens der Schraube und ggf. des aufgewendeten Anzugsmoments in einem separaten Arbeitsschritt nicht erforderlich. Außerdem kann die Verwendung eines entsprechend kalibrierten Messwerkzeuges entfallen.

Vorteilhafte Ausgestaltungen des Markierungselementes sind in den abhängigen Patentansprüchen angegeben.

Vorteilhaft ist das Markierungselement zur Anordnung zwischen einem Schraubenkopf und einem Werkstück oder zwischen einer Mutter und einem Werkstück ausgestaltet, so dass nicht nur mittelbar das Anzugsmoment überwacht werden kann, sondern auch direkt die Kraft, die durch die Schraubverbindung auf die Fügestelle einwirkt. Dadurch kann insbesondere in den Fällen, in denen ein Reibmoment in einer Verschraubung, beispielsweise in den Gewindegängen, nicht präzise vorherbestimmt werden kann, die Qualität einer Schraubverbindung sichergestellt bzw. überwacht und gekennzeichnet werden.

Eine optisch leicht erfassbare Kennzeichnung ergibt sich, wenn das Markierungselement zumindest einen mit einem Farbstoff gefüllten Körper bildet oder einen solchen umfasst, wobei eine Hülle des zumindest einen Körpers derart ausgestaltet und in der Schraubverbindung angeordnet ist, dass bei Überschreitung des Schwellwertes diese Hülle perforiert oder zerstört wird und somit der Farbstoff freigesetzt wird. Dabei kann das Markierungselement eine Mehrzahl von mit Farbstoffen gefüllten Körpern umfassen, insbesondere sog. "Farbperlen", also mit Farbstoff gefüllte Kügelchen aus einem Kunststoff o.ä. Insbesondere diese Farbperlen können in einem Fluid angeordnet sein, wobei dieses Fluid beispielsweise die Funktion eines Schraubensicherungs-Lackes erfüllen kann, wodurch die Schraubverbindung zusätzlich verklebt wird und/oder die Schraubverbindung versiegelt wird. Die Versiegelung kann zum Einen dazu genutzt werden, um eine später, also nach dem Aushärten des Lackes, erfolgte Öffnung der Schraubverbindung zu visualisieren. Zum Anderen kann die Versiegelung auch eine Abdichtung gegen das Eindringen von Feuchtigkeit, Ölen, Gasen etc. bewirken. In einer vorteilhaften Ausgestaltung kann das Fluid selbst den Schraubensicherungs-Lack darstellen; in einer alternativen Ausführungsform können beispielsweise auch die Farbperlen einen solchen Lack enthalten. Schließlich kann als Farbstoff auch direkt ein Schrauben-Sicherungs-Lack verwendet werden.

In den Fällen, in denen zumindest zwei Körper mit unterschiedlichem "Berstverhalten" verwendet werden, beispielsweise mit unterschiedlicher Farbe gefüllte Farbperlen mit unterschiedlicher mechanischer Beständigkeit, können mehrere Stufen an Anzugsmomenten unterschieden werden. Beispielsweise ist es möglich, dass die widerstandfähigeren Farbkörper erst bei einem zu hohen (unzulässigen) Anzugsmoment perforieren und Farbstoffe freisetzen, so dass ein "Überdrehen" einer Schraubverbindung ebenfalls dauerhaft optisch gekennzeichnet werden kann.

In vielen Fällen ist vorteilhaft ist die Kraft, die zur Aktivierung des Markierungselementes aufgewendet wird, kleiner, als die auf die Schraubverbindung einwirkende Kraft. Das wird z.B. erreicht, indem Farbkörper oder Farbperlen in einem Hohlraum einer Unterlegescheibe oder Zahnscheibe untergebracht werden, weil bei einer solchen Ausführungsform ein zerplatzen oder Perforieren des Farbkörpers oder der Farbperlen nicht zu einer Entspannung der Schraubverbindung und damit einer durch die Verschraubung zu bewirkenden Bauteile-Fixierung führt.

Alternativ oder zusätzlich zu der Verwendung von mit Farbstoffen befüllten Körpern kann das Markierungselement mehrteilig konstruiert sein, wobei zumindest ein erster und ein zweiter Teil mittels einer Sollbruchstelle oder einer Soll-Biegestelle miteinander verknüpft bzw. verbunden sind. Die mechanische Konstruktion, die Anordnung des Markierungselements und die Ausgestaltung der Sollbruchstelle bzw. der Soll-Biegestelle sind dabei derart wählbar, dass ein Abbrechen bzw. ein Verbiegen erst bei ausreichend hoher Krafteinwirkung bzw. Verformung des Markierungselementes eintritt. Dadurch kann insbesondere bei Anwendungsfällen, in denen der Austritt von Farbstoffen unerwünscht ist, dennoch eine dauerhafte Kennzeichnung erfolgen.

Je nach Anwendungsfall kann das Markierungselement fest an einem Element der Schraubverbindung, beispielsweise am Schraubenkopf oder an einer Mutter, angeformt sein. Alternativ kann das Markierungselement auch ein separates Element der Schraubverbindung sein, insbesondere nach Art einer Unterlegescheibe ausgeführt sein. Eine solche Unterlegescheibe kann als Standard-Bauelement für verschiedene Durchmesser und für verschiedene Schwellwerte gefertigt werden und somit baugleich in einer Vielzahl von Anwendungsfällen zum Einsatz kommen. Eine Veränderung der eigentlichen Schraube oder Mutter ist dann nicht mehr notwendig.

Eine besonders vorteilhafte Ausführungsform der Variante mit der Sollbrauchstelle ist gegeben, wenn der Schraubenkopf, an dem ein Werkzeug zum Anziehen befestigt oder angebracht wird, als Abreißelement ausgestaltet ist. Damit kann das korrekte Anziehen der Schraubverbindung sowohl optisch als auch taktil erfasst werden. Wenn an der verbleibenden Schraube eine weitere Anlagefläche für ein Schraubwerkzeug, also beispielsweise ein zweiter Sechskant, vorgesehen ist, kann die Schraubverbindung trotz abgerissenem "ersten Schraubkopf" wieder gelöst werden. In einer vorteilhaften Ausgestaltung kann innerhalb der Sollbruchstelle ein Hohlraum oder dgl. mit einer Farbfüllung vorgesehen sein, so dass die offene Bruchstelle auch farblich gekennzeichnet sein kann.

Ausführungsbeispiele für erfindungsgemäße Markierungselemente bzw. erfindungsgemäß ausgestaltete Schraubverbindungen werden nachfolgend anhand der Zeichnungen erläutert.

Dabei zeigen:
- Figuren 1, 2: mit Farbperlen versehene Schrauben bzw. Mut-tern,
- Figuren 3, 4: Schraubverbindungen mit als Farbkörper ausge-führten Markierungselementen,
- Figur 5: eine mit Farbkörpern kombinierte Unterlege-scheibe als Markierungselement,
- Figur 6: Farbkörper, die zur Kennzeichnung aufgrund von Druck und/oder Wärme ausgestaltet sind,
- Figur 7: ein Markierungselement mit einer Sollbruch-stelle,
- Figur 8: ein an einem Schraubenkopf angeformtes Markie-rungselement mit Biegestellen,
- Figur 9: ein separates Markierungselement mit Biege-stellen, und
- Figur 10: eine mit eingebetteten Farbkörpern versehene Unterlegescheibe.

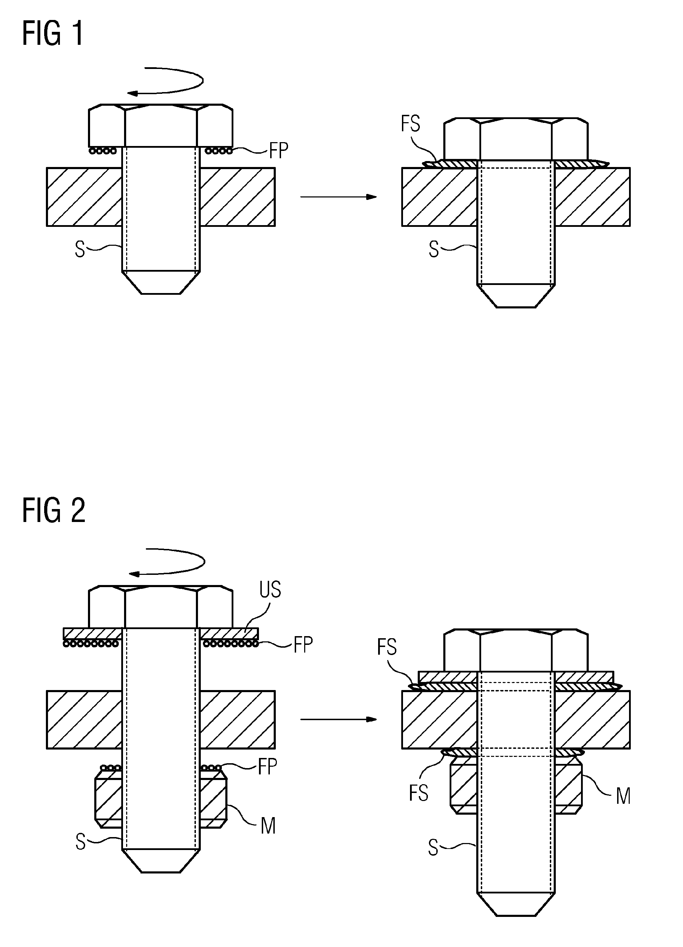

Nachfolgend wird anhand der Figur 1 eine erste Ausführungsform einer Schraubverbindung mit einem erfindungsgemäßen Markierungselement erläutert. Die mit den Figuren jeweils eingeführten Bezeichnungen und Bezugszeichen werden in allen anderen Figuren jeweils für gleiche oder zumindest ähnliche und funktionsgleiche Bauteile und Elemente verwendet und daher nach ihrer jeweiligen Einführung bei der Beschreibung nachfolgender Figuren nicht neu erläutert.

In der Figur 1 ist auf der linken Seite eine Schraubverbindung mit einer Schraube S dargestellt, wobei in dieser Darstellung die Schraubverbindung noch nicht gefügt bzw. angezogen ist. Der Schraubenkopf der Schraube S ist in dem Bereich, der zur Auflage auf einem Werkstück (schraffiert dargestellt) vorgesehen ist, mit sog. "Farbperlen" FP versehen, welche dort aufgeklebt sind. Diese Farbperlen FP bestehen jeweils aus einer widerstandsfähigen Kunststoffhülle, die mit einem flüssigen oder alternativ pulverförmigen Farbstoff versehen ist. Im rechten Teil der Figur 1 ist der gefügte Zustand zu sehen; beim Überschreiten eines Schwellwertes für das Anzugsmoment der Schraubverbindung sind die Farbperlen FP zerplatzt und der Farbstoff FS ist freigesetzt worden und verteilt sich unter und sichtbar neben dem Schraubenkopf der Schraube S. Während die Figur 1 eine Schraube S zeigt, die beispielsweise in einen Gewindegang des Werkstücks (schraffiert dargestellt) eingeschraubt ist, ist in der Figur 2 eine alternative Ausführungsform zu sehen, wobei zusätzlich zu der Ausstattung des Schraubenkopfes mit den Farbperlen FP eine Unterlegescheibe US als separates Markierungselement vorgesehen ist, und wobei die Unterlegescheibe US auf der dem Werkstück zugewandten Seite mit Farbperlen FP versehen ist. In einer alternativen Ausführungsform kann die Unterlegescheibe US auch beidseitig mit Farbperlen FP versehen sein. In der rechten Abbildung der Figur 2 ist der gefügte Zustand zu sehen, wobei sowohl auf der Oberseite als auch auf der Unterseite des Werkstücks eine Farbfläche FS durch die perforierten Farbperlen FP entstanden ist.

Während zuvor beschrieben ist, dass eine mechanische Einwirkung auf das Markierungselement zu dessen Aktivierung führt, kann alternativ auch eine Temperaturerhöhung ausgenutzt werden, die durch die Reibung beim Verdrehen und Festziehen einer Verschraubung im Bereich des Gewindes und der Reibflächen von Schraubenkopf, Mutter oder Werkstück entsteht. Für diesen Fall kann eine Hülle H eines Farbkörpers FK bzw. der Farbperlen FP aus einem Material gefertigt sein, welches durch Wärmeeinwirkung seine Festigkeit verliert. Auch Thermoaktivierbare Farbstoffe können verwendet werden. Bei diesen Ausführungsformen reicht es aus, das Markierungselement in der Nähe der Schraubverbindung zu platzieren.

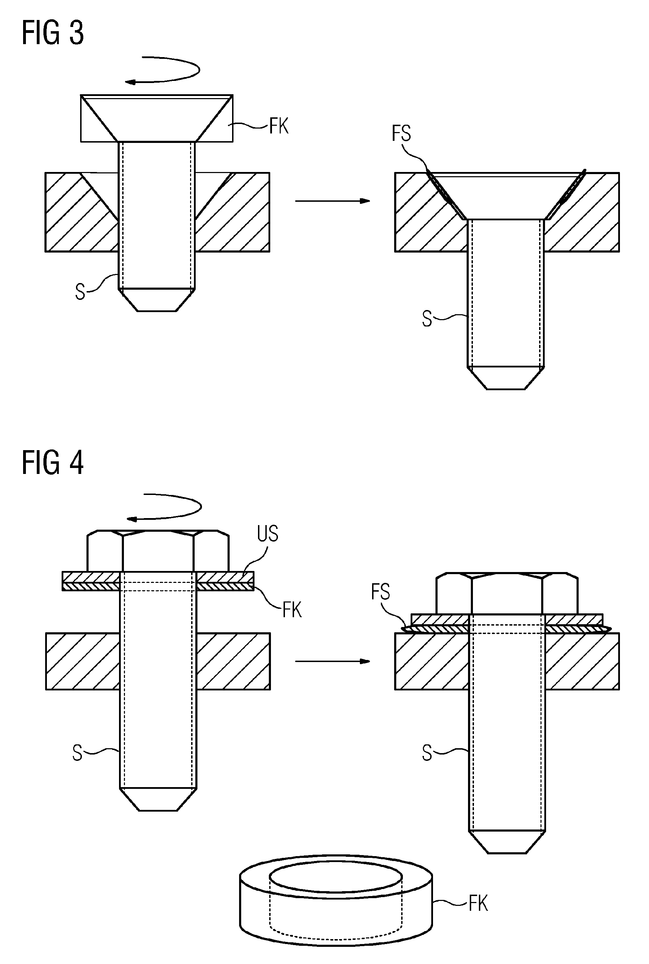

In der Figur 3 ist eine Ausführungsform mit einer Senkkopfschraube gezeigt, wobei im Senkbereich des Schraubenkopfes umfänglich ein Farbkörper FK vorgesehen ist (linke Seite der Abbildung). In der rechten Abbildung der Figur 3 ist der gefügte Zustand zu sehen; aufgrund der Krafteinwirkung bei Auftreten des definierten Anzugsmoments ist der Farbkörper FK zerplatzt und eine Farbfläche oder Farbschicht mit dem Farbstoff FS entstanden, wobei der Farbstoff FS zumindest teilweise aus dem Spalt zwischen der Senkkopfschraube und dem Werkstück herausquillt und somit die ordnungsgemäß gefügte Schraubverbindung sichtbar kennzeichnet. Alternativ kann bei dieser Ausführungsform der Farbkörper FK auch am Werkstück angebracht oder als separates Element ausgeführt sein.

In der Figur 4 ist eine alternative Ausführungsform eines Markierungselements mit einem Farbkörper FK dargestellt (ungefügte Schraubverbindung linksseitig). Hierbei ist eine Unterlegescheibe US einseitig mit einem ringförmigen Farbkörper FK beaufschlagt, wobei der Farbkörper FK den Farbstoff FS enthält. In der Figur 4 ist rechts der gefügte Zustand mit dem ausgetretenen Farbstoff FS zu sehen.

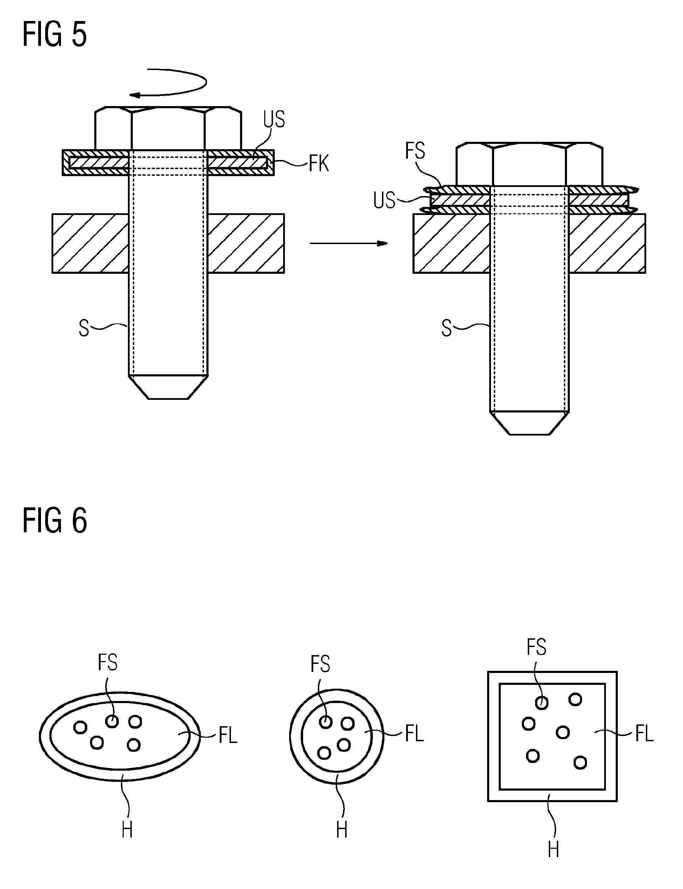

In der Figur 5 ist eine alternative Ausführungsform einer Unterlegescheibe US als Markierungselement zu sehen, wobei die Unterlegescheibe US in den Farbkörper FK eingebettet ist. Im gefügten Zustand (rechte Seite der Abbildung) ist zu sehen, dass mit ein- und demselben Markierungselement sowohl zwischen Unterlegescheibe US und dem Werkstück als auch zwischen der Unterlegescheibe US und dem Schraubenkopf Farbstoff FS einbringbar ist. Dies ist insbesondere dann vorteilhaft, wenn der Farbkörper FK neben oder als Farbstoff FS Schraubensicherungs-Lack enthält, der eine Verklebung und/oder Versiegelung der Schraubverbindung bewerkstelligt. Zudem hat das Markierungselement selbstverständlich weiterhin die Funktion einer herkömmlichen Unterlegescheibe US.

In der Figur 6 sind schematisch mehrere Ausführungsformen der Farbkörper FK gezeigt, wobei diese jeweils aus einer unterschiedlich widerstandsfähigen Hülle H und einem eingebetteten Fluid FL bestehen, wobei das Fluid FL Farbstoff FS enthält. Dabei ist entweder das Fluid FL selbst mit Farbpigmenten versehen, oder aber es sind Farbperlen FP mit eingebettetem Farbstoff FS darin vorgesehen. Dabei können entweder die Hülle H oder aber die Farbperlen FP jeweils mit unterschiedlicher mechanischer Widerstandsfähigkeit ausgestattet sein, d.h., dass sich über die Hülle H oder über die Ausgestaltung der Farbperlen FP die Kraft oder die Verformung einstellen lässt, die zu einer Freisetzung des jeweils enthaltenen Farbstoffes FS notwendig ist und somit ein Maß für das minimal erforderliche Anzugsmoment darstellt. Es lassen sich auch in ein- und derselben Schraubverbindung entweder mehrere Farbkörper FK unterschiedlicher mechanischer Widerstandsfähigkeit oder unterschiedliche Sorten an Farbperlen FP mit unterschiedlicher Widerstandskraft und jeweils unterschiedlichen Farbstoffen FS einbringen, so dass beim Erreichen eines ersten Schwellwertes die erste Sorte Farbstoff FS freigesetzt wird, und bei einem weiteren Anziehen der Schraubverbindung und damit bei Erreichen weiterer Schwellwerte andere Farbstoffe FS freigesetzt werden. Somit kann je nach Ausgestaltung in verschiedenen Stufen das tatsächliche Anzugsmoment visualisiert werden. Beispielsweise können unterschiedliche Pigmente in den Farbfüllungen Aufschluss über das Anzugsmoment geben. So kann beispielsweise eine erste Farbe für einen ersten Anzugsdrehmomentenbereich und eine zweite Farbe für einen zweiten Anzugsdrehmomentenbereich stehen. Dabei sind auch Farbmischungen und Farbskalen durch Mischungen von Einzelfarben möglich.

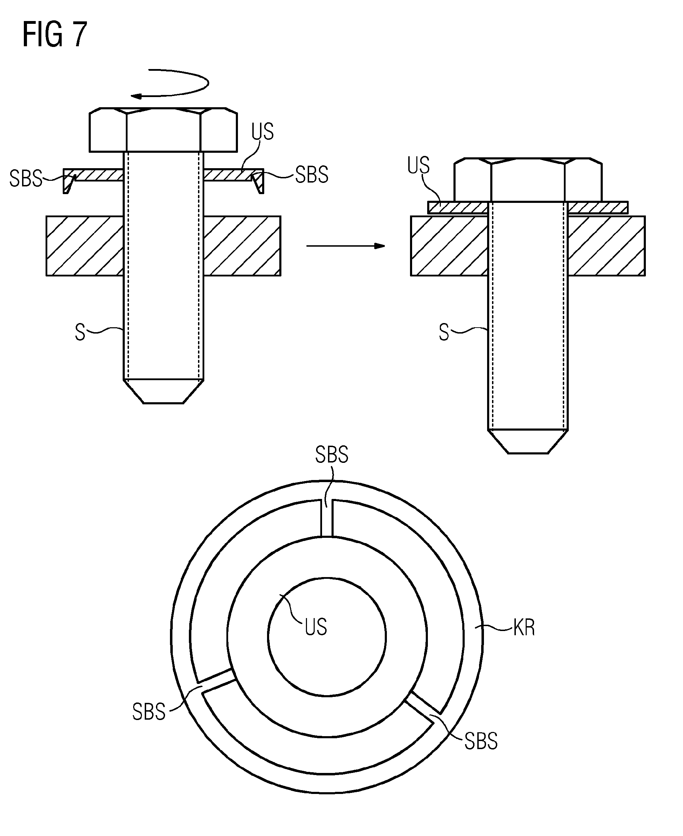

In der Figur 7 ist eine alternative Ausführungsform eines Markierungselementes gezeigt, wobei hier eine Unterlegescheibe US vorgesehen ist, welches über eine oder mehrere Sollbruchstellen SBS mit einem zweiten Teil, hier: einem Kranz KR, verbunden ist. Bei Überschreiten des Schwellwertes wird der zweite Teil (Kranz KR) abgetrennt, wodurch das Überschreiten des minimal erforderlichen Anzugsmomentes gekennzeichnet bzw. visualisiert und sogar akustisch rückgemeldet wird. Hierbei wird nach Überschreiten einer definierten Axialkraft ein durch schmale Stege mit der Unterlegescheibe US verbundener Kranz KR weggebrochen. Die Stege sind dabei mit Sollbruchstellen SBS versehen. Die Axialkraft, die zum Bruch führt, lässt sich dabei über verschiedene Parameter einstellen. In den Fällen, in denen ein Kranz KR und eine Unterlegescheibe US in einem Bauteil vereint sind, spielen dabei beispielsweise der Werkstoff, die Ausprägung der Sollbruchstelle, die Geometrie der Sollbruchstelle, der Querschnitt der Sollbruchstelle und eine konstruktiv bedingte Überlagerung von Torsionsmoment und Axialkraft an der Sollbruchstelle SBS eine Rolle. In den Fällen, in denen der Kranz KR und die Unterlegescheibe US aus zwei verschiedenen Bauteilen gefügt ist, sind die Werkstoffpaarung, die Art der Fügung (geschweißt, geklebt, geklemmt, geclincht, gelötet), die Ausprägung der Fügestelle, die Geometrie der Fügestelle, der Querschnitt der Fügestelle, ein etwaiges Bindemittel in der Fügestelle (z.B. Klebstoff) und ebenfalls die konstruktiv beeinflussbare Überlagerung von Torsionsmoment und Axialkraft in der Fügestelle zur Definierung des Schwellwertes geeignet. Im rechten Teil der Abbildung in der Figur 7 ist der gefügte Zustand zu sehen, bei dem der Kranz abgetrennt und entfernt ist. Während in der Figur 7 das Markierungselement eine separate Unterlegescheibe US mit einem angeformten Zweiten Teil ist, kann in einer alternativen, nicht dargestellten Ausführungsform der zweite Teil direkt am Schraubenkopf oder an einer Mutter angeformt sein.

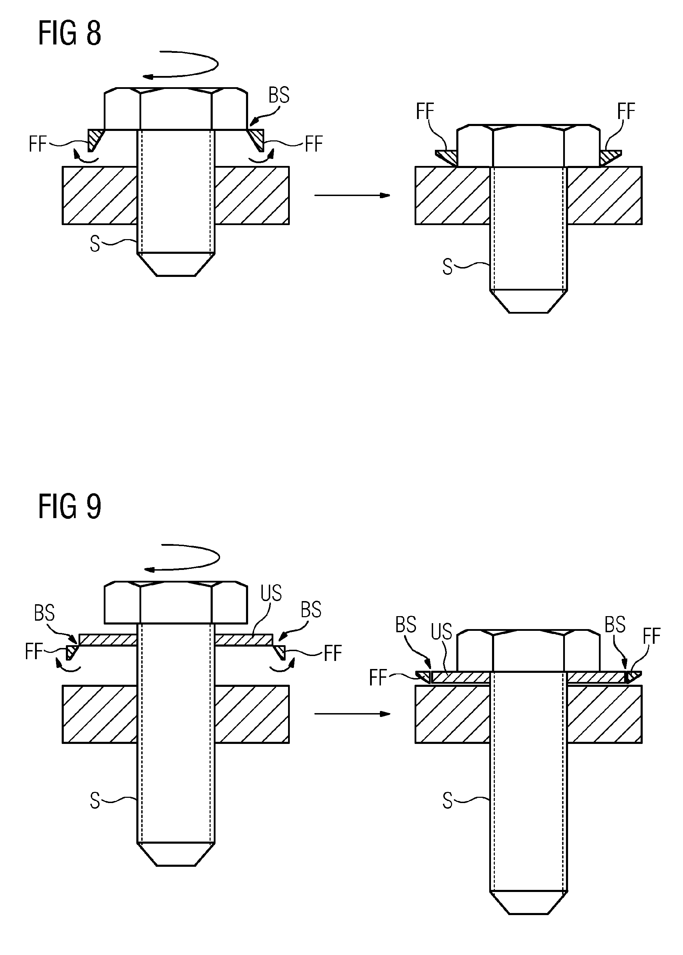

In der Figur 8 ist eine alternative Ausführungsform eines Markierungselementes dargestellt, wobei an einem Schraubenkopf der Schraube S eine Anzahl zweiter Teile in Form von Laschen angeformt ist, wobei zwischen dem Schraubenkopf und den Laschen eine Soll-Biegestelle BS vorgesehen ist. Bei Überschreiten eines Schwellwertes verbiegen diese Laschen in der Soll-Biegestelle, so dass beispielsweise die ursprünglich in Richtung des Werkstücks ausgerichteten Laschen horizontal oder nach außen weggebogen werden und somit sichtbar werden, wodurch die ordnungsgemäß angezogene Schraubverbindung gekennzeichnet wird. Dabei beeinflusst auch die Geometrie der Laschen, die auf das Eindrehen der Schraube S abzustimmen ist (Links- oder Rechtsgewinde), das Umbiegen der Laschen und somit den Schwellwert.

In einer vorteilhaften Ausgestaltung können die Farbflächen, die im ungefügten Zustand nicht oder nur wenig sichtbar sind, farblich ausgestaltet sein, so dass der gewünschte Zustand leicht erfassbar ist.

In der Figur 9 ist eine zu der Figur 8 ähnliche Anordnung gezeigt, wobei hier jedoch der zweite Teil, der mittels einer Soll-Biegestelle BS an einem ersten Teil angeformt ist, nicht direkt am Schraubenkopf angeformt ist, sondern an einer Unterlegescheibe US. Demzufolge entsteht ein separates Markierungselement. Die Wirkungsweise entspricht derjenigen aus der Figur 8.

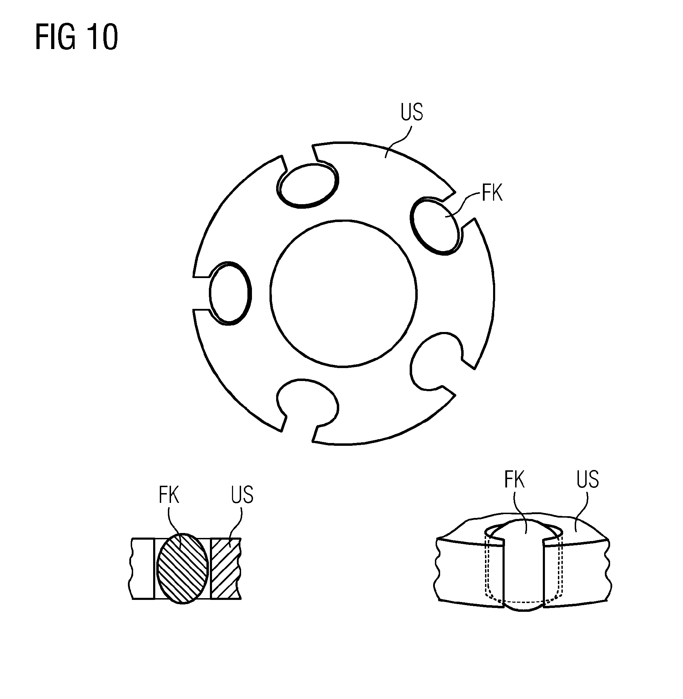

In einer weiteren vorteilhaften, in der Figur 10 dargestellten Ausführungsform wird eine Unterlegescheibe US mit Hohlräumen - beispielsweise in einer Zahnscheibe - verwendet, in denen Farbperlen FP oder andere Farbkörper FK eingebracht sind. Die Hohlräume können, wie in der Figur 10 gezwigt, zum Außenrand der Unterlegescheibe US hin geöffnet sein, oder aber (nicht gezeigt) aus senkrecht zur Scheiben-Ebene verlaufenden Sack- oder Durch-Bohrungen bestehen.

Beim Festziehen der Schraubverbindung werden der oder die Farbkörper zerstört (perforiert). In einer ersten Variante ist dazu das Volumen der Farbkörper größer als das Volumen der Hohlräume. Zusätzlich oder alternativ kann das Volumen der Hohlräume in Abhängigkeit vom Druck auf die Unterlegescheibe US und damit in Abhängigkeit vom Anzugsmoment der Schraubverbindung kleiner werden, beispielsweise bei Verwendung der "Aussparungen" einer Zahnscheibe als Hohlräume oder bei Verwendung eines elastischen Materials für die Unterlegescheibe US (z.B. Kautschuk, Elastomer oder dgl.). Die simultane Verwendung unterschiedlich großer Farbkörper FK, die jeweils mit unterschiedlicher Farbe gefüllt sind, und/oder unterschiedlich großer Hohlräume gestattet die Differenzierung verschiedener Anzugsmomente.

Bei einer zum Anzugsmoment proportionalen Verformung nimmt die Unterlegescheibe US nahezu die vollständige Kraft auf, so dass im Augenblick des Perforierens der Farbperlen FP , Farbkörper FK o.ä. keine wesentliche Lockerung der Verschraubung auftritt. Auch bei den zuvor diskutierten Varianten eines Markierungselementes mit Soll-Biegestellen SB oder Sollbruchstellen SBS kann es vorteilhaft sein, wenn das Markierungselement selbst nur einen Bruchteil der Kraft im Bauteile-Gefüge der Verschraubung aufnimmt bzw. bei der Aktivierung des Markierungselementes keine wesentliche Änderung der durch das Markierungselement aufgenommenen Kräfte eintritt.

Auch die Ausführungsformen, die auf die Verwendung einer Sollbruchstelle bzw. Soll-Biegestelle basieren, können mehrstufig ausgeführt sein, d.h., dass unterschiedliche Sollbruchstellen SBS oder Soll-Biegestellen SB vorgesehen sein können, die bei unterschiedlichen Kräften, Verformungen und damit Anzugsmomenten reagieren.

Eine weitere, nicht dargestellte Ausführungsform des Markierungselementes auf Basis einer Sollbruchstelle SBS besteht in der Verwendung eines - ggf. auch zusätzlichen - Abreiß-Schraubenkopfes, wobei die Bruchstelle ggf. auch mit einem Farbstoff FS versehen sein kann.

Durch die vorgenannten Ausführungsformen des Markierungselementes, die auch hinsichtlich einiger oder aller Merkmale miteinander kombinierbar sind, lassen sich eine Anzahl Vorteile realisieren. So müssen beispielsweise Schrauben und Schraubverbindungen, die in einer oder mehreren nachfolgenden Prüfungen auf das Merkmal "korrekt angezogen" überprüft werden sollen, nicht im Vorfeld oder bei der Montage extra mit einem Lackstift o.ä. markiert werden. Bei einer Prüfung des Merkmals "Schraubverbindung korrekt" muss auch nicht auf ein separates Werkzeug oder Messmittel zurückgegriffen werden; vielmehr wird dies während des Fügevorgangs automatisch überprüft und durch die Farbgebung (geplatzte Farbkörper) oder Formänderung (Biegelaschen oder Sollbruchstelle) dauerhaft visualisiert und ggf. auch akustisch rückgemeldet (Sollbruchstelle). Anhand der Definition verschiedener Farben für verschiedene Anzugsmomente kann bei der Montage schon aufgrund der Farbgebung der Farbkörper ersichtlich sein, mit welchem Anzugsmoment eine Schraubverbindung gefügt werden muss. Weiter wird das Unterschreiten eines Anzugsmomentes ausgeschlossen, da ein Anwender das Anziehen einer Schraubverbindung so lange fortführt, bis das Ereignis des Platzens der Farbkörper, des Abtrennens eines Bruchstückes oder des Verbiegens eines Indikators oder Indikator-Bleches eintritt. Eine besonders vorteilhafte Ausführungsform ergibt sich, wenn der Farbstoff FS oder ein Fluid FL die Funktionen eines Schraubensicherungs-Lackes zusätzlich erfüllt.

## Patentansprüche

1. Markierungselement zur Kennzeichnung eines Anzugsmoments einer Schraubverbindung,
**dadurch gekennzeichnet,**
**dass** das Markierungselement derart in der Schraubverbindung angeordnet ist, dass eine zum Anzugsmoment der Schraubverbindung proportionale Kraft und/oder Verformung auf das Markierungselement einwirkt,
wobei das Markierungselement derart ausgestaltet ist, dass bei Überschreitung eines Schwellwertes für das Anzugsmoment das Markierungselement derart verformt wird, dass eine dauerhaft sichtbare Veränderung des Markierungselementes eintritt.

2. Markierungselement nach Patentanspruch 1,
**dadurch gekennzeichnet,**
**dass** das Markierungselement zur Anordnung zwischen einem Schraubenkopf und einem Werkstück ausgestaltet ist.

3. Markierungselement nach einem der vorhergehenden Patentansprüche,
**dadurch gekennzeichnet,**
**dass** das Markierungselement zumindest einen mit einem Farbstoff (FS) gefüllten Körper (FK) bildet oder umfasst, wobei eine Hülle (H) des zumindest einen Körpers (FK) derart ausgestaltet und in der Schraubverbindung angeordnet ist, dass bei Überschreitung des Schwellwertes diese Hülle (H) perforiert und der Farbstoff (FS) freigesetzt wird.

4. Markierungselement nach Patenanspruch 3,
**dadurch gekennzeichnet,**
**dass** das Markierungselement eine Mehrzahl von mit Farbstoffen (FS) gefüllten Körpern (FK) umfasst.

5. Markierungselement nach Patentanspruch 4,
**dadurch gekennzeichnet,**
**dass** ein erster Körper (FK) mit einem ersten Farbstoff (FS) gefüllt ist, wobei die Hülle (H) dieses ersten Körpers (FK) derart ausgestaltet und angeordnet ist, dass diese bei Überschreitung eines ersten Schwellwertes zerstört wird, und dass zumindest ein zweiter mit einem zweiten Farbstoff (FS) gefüllter Körper (FK) vorgesehen ist, wobei der zweite Körper (FK) derart ausgestaltet und angeordnet ist, dass dieser bei Überschreitung eines zweiten Schwellwertes zerstört wird, wobei der erste und der zweite Farbstoff (FS) sich voneinander unterscheiden.

6. Markierungselement nach einem der Patentansprüche 3 bis 5, **dadurch gekennzeichnet,**
**dass** der oder die Körper (FK) jeweils aus einer Anzahl mit flüssigem oder pulverförmigen Farbstoff (FS) gefüllter Farbperlen (FP) gebildet wird oder werden.

7. Markierungselement nach einem der Patentansprüche 3 bis 6, **dadurch gekennzeichnet,**
**dass** der Farbstoff (FS) ein Schraubensicherungs-Lack ist.

8. Markierungselement nach Patentanspruch 7,
**dadurch gekennzeichnet,**
**dass** der Schraubensicherungs-Lack derart ausgestaltet ist, dass nach dessen Aushärtung eine weitere Bewegung der Schraubverbindung zu einer sichtbaren Rissbildung in der Lack-Oberfläche oder zu einem sichtbaren Abplatzen des Lackes führt.

9. Markierungselement nach einem der Patentansprüche 7 oder 8,
**dadurch gekennzeichnet,**
**dass** der Schraubensicherungs-Lack derart ausgestaltet ist, dass nach dessen Aushärtung eine Verklebung oder Versiegelung der Schraubverbindung gegeben ist.

10. Markierungselement nach einem der Patentansprüche 1 oder 2,
**dadurch gekennzeichnet,**
**dass** das Markierungselement einen ersten und zumindest einen zweiten Teil aufweist, wobei die Verbindungsstelle oder die Verbindungsstellen zwischen dem ersten und dem zumindest einem zweiten Teil als Sollbruchstelle (SBS) oder als Soll-Biegestelle (SB) ausgestaltet ist,
wobei das Markierungselement derart ausgestaltet und angeordnet ist, dass bei Überschreitung des Schwellwertes der zweite von dem ersten Teil an der Sollbruchstelle (SBS) sichtbar getrennt wird oder der zweite Teil in Relation zum ersten Teil an der Soll-Biegestelle (SB) sichtbar bewegt wird.

11. Markierungselement nach Patentanspruch 10,
**dadurch gekennzeichnet,**
**dass** eine Mehrzahl zweiter Teile vorgesehen ist, wobei die Sollbruchstellen (SBS) bzw. die Soll-Biegestellen (SB) zum Bruch bzw. zur Verformung bei zumindest zwei unterschiedlichen Schwellwerten ausgestaltet und angeordnet sind.

12. Markierungselement nach einem der Patentansprüche 10 oder 11,
**dadurch gekennzeichnet,**
**dass** der zweite Teil als ein Schraubenkopf mit einer Angriffsfläche zum Einleiten eines Momentes mittels eines Schraubwerkzeuges ausgestaltet ist, wobei die Sollbruchstelle (SBS) derart ausgestaltet ist, dass der zweite Teil bei Überschreiten des Schwellwertes abreißt, wobei die Bruchstelle zur optischen oder taktilen Kennzeichnung geeignet ist, und wobei der an der Schraubverbindung verbleibende erste Teil derart ausgestaltet ist, dass die Fügefunktion der Schraubverbindung nach Abreißen des zweiten Teils weiter gegeben ist.

13. Markierungselement nach einem der vorhergehenden Patentansprüche,
**dadurch gekennzeichnet, dass**
das Markierungselement ringförmig und zur Anordnung zwischen einem Schraubenkopf und einer Werkstück-Oberfläche nach Art einer Unterlegescheibe ausgestaltet ist.
